# EUROPÄISCHE PATENTANMELDUNG

(11) **EP 1 529 814 A2**
(43) Veröffentlichungstag der Anmeldung: **11.05.2005**
(21) Anmeldenummer: 04021171.6
(22) Anmeldetag: 07.09.2004
(51) Int. Cl.: C08L 101/06, C08G 65/331, C08G 18/48

(54) **Thermoplastische Kunstoffe, insbesondere thermoplastisches Polyurethan enthaltend Weichmacher**

(30) Priorität: 09.10.2003 DE 10347663
(71) Anmelder: BASF Aktiengesellschaft, 67056 Ludwigshafen (DE)
(72) Erfinder: Malz, Hauke Dr., 49356 Diepholz (DE); Flug, Thomas, 49419 Wagenfeld (DE); Rybicki, Sylvia, 49179 Ostercappeln (DE)

(57) **Zusammenfassung**

Die Erfindung betrifft thermoplastischen Kunststoff enthaltend Verbindung (i), die mindestens eine phenolische Gruppe aufweist, in einer Menge zwischen 5,5 Gew.-% und 50 Gew.-%, bezogen auf das Gesamtgewicht des thermoplastischen Kunststoffes.

## Beschreibung

Die Erfindung betrifft thermoplastische Kunststoffe, insbesondere thermoplastisches Polyurethan enthaltend Verbindung (i), die mindestens eine phenolische Gruppe aufweist, in einer Menge zwischen 5,5 Gew.-% und 50 Gew.-%, bevorzugt 10 Gew.-% und 40 Gew.-%, besonders bevorzugt 15 Gew.-% und 25 Gew.-%, bezogen auf das Gesamtgewicht des thermoplastischen Kunststoffes.

Thermoplastische Kunststoffe, z.B. thermoplastische Polyurethane, Polyolefine, Polyacetale, Polyester, Styrol- und Styrolcopolymere, Polyamide und Polycarbonate sind allgemein bekannt. Thermoplastische Polyurethane, im Folgenden auch als TPU bezeichnet, sind Kunststoffe mit einem vielfältigen Anwendungsfeld. So finden sich TPU in der Automobilindustrie, z.B. in Instrumententafelhäuten, in Folien, in Kabelummantelungen, in der Freizeitindustrie, als Absatzflecke, als Funktions- und Designelement bei Sportschuhen, als Weichkomponente in Hart -Weichkombinationen usw.

Üblicherweise weisen TPU einen Härtegrad von 80 Shore A bis 74 Shore D auf. Viele der oben genannten Anwendungen erfordern aber einen Härtegrad unterhalb der 80 Shore A. Aus diesem Grund ist es Stand der Technik, zu TPU Weichmacher zuzugeben, mit denen die Shorehärte abgesenkt werden kann. Beispiele für gängige Weichmacher sind Benzoate, Phthalate und Phosphorsäureester.

Bei der Auswahl des Weichmachers ist bevorzugt darauf zu achten, dass das Produkt verträglich mit dem TPU ist. Verträglich bedeutet in diesem Zusammenhang, dass sich der Weichmacher während der für die TPU-Herstellung üblichen Verfahren dem TPU zumischen lassen muss und dass der Weichmacher anschließend während der ganzen Zeit möglichst im Produkt verbleibt und nicht durch Ausschwitzen oder Ausdampfen verloren geht. Zudem sollten die mechanischen Eigenschaften des TPU, z.B. der Abrieb nicht schlechter werden.

Viele weichgemachte TPU gehen in Anwendungen, die zudem dem Sonnenlicht ausgesetzt sind, z.B. Designelemente der Schuhindustrie. Hier ist es von Nachteil, wenn der Weichmacher zu einer Vergilbung des Produktes durch UV-Abbau beiträgt.

Die Aufgabe der vorliegenden Erfindung bestand somit darin, einen weichgemachten thermoplastischen Kunststoff zu entwickeln, insbesondere ein weichgemachtes thermoplastisches Polyurethan, wobei der verwendete Weichmacher gut einarbeitbar ist, nicht ausblutet, nicht ausdampft und gleichzeitig die Eigenschaften des Kunststoffes, wie Wärmestabilität und UV-Stabilität verbessert.

Überraschenderweise konnte die Aufgabe gelöst werden durch die eingangs dargestellten thermoplastischen Kunststoffe. Die erfindungsgemäßen Verbindungen (i) werden in dieser Schrift aufgrund ihrer Eigenschaften auch als "Weichmacher" oder "Stabilisatoren" bezeichnet.

Phenolische Stabilisatoren sind die am meisten gebrauchten Stabilisatoren in der Kunststoffindustrie und eine große Zahl phenolischer Stabilisatoren ist kommerziell erhältlich. Beispiele für phenolische Stabilisatoren, insbesondere sterisch gehinderte Phenole finden sich in Plastics Additive Handbook, 5^{th} edition, H. Zweifel, ed, Hanser Publishers, München, 2001 ([1]), S.98-107 und S 116-S. 121. Die überwiegende Zahl der phenolischen Stabilisatoren ist dabei kristallin, nur wenige kommerzielle phenolische Stabilisatoren sind flüssig. Beispiele für flüssige phenolische Stabilisatoren sind das Irganox® 1135 (Ciba Speciality Chemicals) und das Anox PP18 (Great Lakes Chemical Corporation). Üblicherweise werden sterisch gehinderten Phenole dem Kunststoff in einer Konzentration von 0,01 bis 5 Gew.-%, bezogen auf das Gesamtgewicht des Kunststoffes zugesetzt, da diese Konzentration ausreichend ist für die meisten Anwendungen, bei denen es um die Verbesserung der thermischen Stabilität des Kunststoffes geht. Überraschenderweise hat sichietzt gezeigt, dass insbesondere bei einer Temperatur von 25°C flüssige phenolische Stabilisatoren in höheren Konzentrationen in thermoplastischen Kunststoffen, insbesondere in TPU eingesetzt, weichmachende Eigenschaften besitzen, ohne dabei die Qualität des TPU zu reduzieren.

Als thermoplastische Kunststoffe, die erfindungsgemäß weichgemacht werden können, kommen allgemein bekannte thermoplastische Kunststoffe in Frage, z.B. Poly-α-olefine, wie Polyethylen, Polypropylen, Polyoxymethylen, Polybutylen, Polyisopren und ähnliche einschließlich der Mischpolymerisate von Poly-α-olefinen; Polyamide, wie Polyhexamethylenadipinsäureamid und Polycaprolactam; Polyester, wie Polymethylenterephthalate; Polycarbonate; Polyacetale; Polystyrol; Polyethylenoxyd und Mischpolymerisate, wie solche aus hochschlagfestem Polystyrol, das Mischpolymerisate von Butadien und Styrol enthält, und Mischpolymerisate, die durch Mischpolymerisation von Acetylnitril, Butadien und/oder Styrol gebildet werden; besonders bevorzugt ist thermoplastisches Polyurethan, das gegebenenfalls in Mischung mit anderen thermoplastischen Kunststoffen vorliegen kann.

Allgemein können phenolische Stabilisatoren, d.h. die erfindungsgemäßen Verbindungen (i), beschrieben werden durch folgende Struktureinheit.

(F-)ₙA

mit den folgenden allgemeinen Bedeutungen:
F ist die funktionelle Gruppe, die den Stabilisator als Phenol definiert, d.h. F enthält mindestens einen phenolischen Rest,
A ist eine Ankergruppe, an die der phenolische Rest geknüpft ist, bevorzugt geradkettiger oder verzweigter Kohlenwasserstoffrest mit 2 bis 30 Kohlenstoffatomen, besonders bevorzugt Polyetheralkohol, insbesondere Polyetheralkohol mit einem Ethylenoxid Anteil im Polyetherol größer als 25 %, besonders bevorzugt 25 % bis 100 %, bevorzugt 50 % bis 100 % insbesondere 70 % bis 100 %,
n bedeutet 1, 2, 3, 4, 5 oder 6, bevorzugt 1, 2, 3, oder 4, insbesondere 2 oder 3.
Die Zahl n gibt somit die Anzahl der phenolischen Gruppen an, die an der Ankergruppe befestigt sind. F ist an A bevorzugt über eine Amid- und/oder besonders bevorzugt Esterstruktur gebunden.

Bevorzugt weist F die folgende allgemeine Struktur auf: 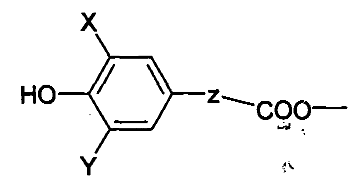 X, Y: unabhängig voneinander Wasserstoff, geradkettige, verzweigtkettige und/oder cyclische Alkylgruppe mit 1 bis 12 Kohlenstoffatomen, bevorzugt -C(CH₃)₃
Z: Linearer oder verzweigter Alkylenrest mit 1 bis 12 Kohlenstoffatomen, bevorzugt -CH₂-CH₂-.

Bevorzugt wird somit als phenolische Gruppe (F) die folgende Carbonsäure oder ein entsprechendes Säurederivat dieser Carbonsäure eingesetzt:

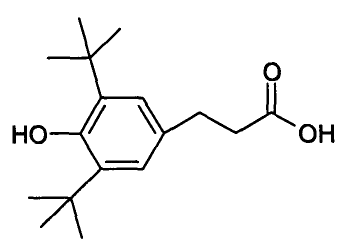

Dabei ist die phenolische Gruppe (F) bevorzugt über ihre Carboxylgruppe mit der Ankergruppe (A) verbunden, bevorzugt amidiert oder verestert, besonders bevorzugt verestert.

Die Synthese der phenolischen Wirkstoffgruppen (F) ist allgemein bekannt und Vorschriften beispielsweise zur Synthese von 3-(3,5-Ditert.-Butyl-4-hydroxyphenyl)-propionsäuremethylester finden sich in US 3644482 Seite 4 Zeile 28 ff. Im Folgenden wird ein beispielhaftes Verfahren dargestellt: Zur Herstellung von 3-(3,5-Ditert.-Butyl-4-hydroxyphenyl)-propionsäuremethylester kann z.B. 2,6-Di-tert.butylphenol und 0,1 bis 10 mol % bezogen auf 2,6-Di-tert.butylphenol, eines basischen Katalysators wie z.B. Lithiumhydroxid, Lithuimmethylat, Lithiumethylat, Kaliumhydroxid,Kaliummethylat, Kaliumethylat, Kalium-tert.-butylat, Natriumhydroxid Natriummethylat, Natriumethylat oder/oder Natrium-tert.butylat, bevorzugt aber Kaliummethylat oder Kalium tert.butylat in einen Reaktor gegeben werden. Nach Abdestillieren der korrespondierenden Säure z.B. Methanol, wenn Kaliummethylat eingesetzt wird oder Wasser, wenn Kaliumhydroxid verwendet wird, durch Erhitzen auf z.B. 120 bis 200°C, bevorzugt aber 130 bis 160°C unter Verwendung eines Stickstofftreibstroms und/oder Vakuum kann die reaktive Mischung anschließend auf 90 bis 160°C, bevorzugt auf 100 bis 130°C temperiert und Methylacrylat langsam zudosiert werden. Bevorzugt wird diese Zudosierung unter einem Druck durchgeführt, der größer ist als der Dampfdruck des Methylacrylats bei der gegebenen Reaktionstemperatur. So wird gewährleistet, dass das Methylacrylat nicht aus der Reaktionslösung durch Verdampfen entfernt wird. Wird drucklos gearbeitet, so wird das verdampfte Methylacrylat bevorzugt im Rückfluss wieder in die Reaktionslösung zurückgeleitet. Bevorzugt werden 90 bis 120 mol % Methylacrylat, bezogen auf 2,6-Di-tert.butylphenol zum 2,6-Di-tert.butylphenol zudosiert, insbesondere aber 95 bis 110 mol %. Nach 60 bis 180 min Reaktionszeit wird die Reaktion üblicherweise beendet. Das Reaktionsprodukt kann dann durch Neutralisation des alkalischen Katalysators und anschließende Umkristallisation bzw. Rektifikation auf allgemein bekannte Weise gereinigt werden. Soll bei der anschließenden Herstellung des erfindungsgemäßen phenolischen Stabilisators ein basischer Katalysator Verwendung finden, so kann bevorzugt Methylacrylat aus dem Reaktionsprodukt entfernt werden, bevorzugt z.B. bei 50 bis 80°C, insbesondere 60°C, bevorzugt unter Vakuum und/oder Verwendung eines Stickstofftreibstroms.Bevorzugt wird anschließend die Ankergruppe (A) zu der Mischung enthaltend die phenolische Wirkstoffgruppe (F) zugegeben . Nach Inertisierung und Zudosierung des Reduktionsmittels kann die Umesterungsreaktion dann wie bereits beschrieben fortgeführt werden. Der Vorteil dieser Fahrweise, die in einem Reaktor durchgeführt werden kann, liegt in der effizienten Nutzung des Reaktors und des Einsparens des Reinigungsschrittes.

Wird der Weichmacher aus einem sterisch gehinderten Phenol durch chemische Reaktion, z.B. Umesterung oder Umamidierung mit einem Alkohol oder Amin hergestellt, so kann sterisch gehindertes Phenol in situ hergestellt werden. Alternativ kann es in einer ersten Reaktionsstufe hergestellt, isoliert und anschließend mit dem Alkohol oder Amin umgesetzt werden. In beiden Fällen kann es aber sein, dass schon bei der Herstellung des sterisch gehinderten Phenols Verunreinigungen entstehen, die bei der weiteren Umsetzung des sterisch gehinderten Phenols zum endgültigen Stabilisator zu Chromophoren führt. Die Konzentration dieser Chromophore kann dabei in einem breiten Bereich schwanken. Dies führt dazu, dass die einzelnen Stabilisatorchargen unterschiedliche Farbzahlen haben und dementsprechend keine einheitliche Qualität geliefert werden kann. Durch die Verwendung eines Reduktionsmittels z.B. eines Phosphites kann auch bei unterschiedlicher Chromophorenkonzentration eine einheitliche Produktfarbe erreicht werden.

Die Ankergruppe (A) dient unter anderem zur Einstellung des Molekulargewichts des Weichmachers sowohl über das Molekulargewicht der Ankergruppe selbst als auch über die Anzahl der Hydroxyl- und/oder Aminogruppe, an die Wirkstoffgruppen (F) gebunden werden können. Bevorzugt weist die Ankergruppe (A) 1 bis 6 Hydroxylgruppen und/oder 0 bis 6 Aminogruppen auf. Besonders bevorzugt weist die Ankergruppe (A) 1 bis 4, insbesondere 2 bis 3 Hydroxylgruppen auf. Bei der Ankergruppe handelt es sich um Verbindungen, die aufgrund ihrer Hydroxyl- und/oder Aminogruppen in der Lage sind, mit der Carboxylfunktion der phenolischen Gruppe (F) über eine Ester- oder Amidgruppe verbunden zu werden. Bevorzugt handelt es sich bei der oder den Hydroxylgruppe(n) der Ankergruppe (A) um primäre Hydroxylgruppe(n), sofern Hydroxylgruppen und nicht ausschließlich Aminogruppen vorhanden sind.

Bespielsweise können lineare, verzweigte oder cyclische Alkylgruppen mit 1 bis 30 C-Atomen und 1 bis 6 OH-Gruppen, bevorzugt 1 bis 4 OH-Gruppen, insbesondere 2 bis 3 OH-Gruppen verwendet werden. Beispielsweise können verwendet werden: Heptanol, Oktanol, Nonanol, Dodekanol, 3-Methylbutanol, 3-Ethylhexanol, Neopentylglykol. Bevorzugt sind monofunktionelle lineare oder verzweigte Alkylalkohole mit 7 bis 18 Kohlenstoffatomen, bevorzugt eine Mischung enthaltend monofunktionelle Alkylalkohole mit 7 bis 9 Kohlenstoffatomen, wobei die Mischung pro Alkylalkohol im Durchschnitt 8 Kohlenstoffatome aufweist. Weiterhin bevorzugt ist ein linearer Alkylalkohol mit 18 Kohlenstoffatomen eingesetzt. Ebenfalls bevorzugt sind monofunktionelle lineare oder verzweigte Alkylalkohole mit 13 bis 15 Kohlenstoffatomen.

Weiter können als Ankergruppen Etheralkohole verwendet werden, z.B. Diethylenglykol, Triethylenglykol, Dipropylenglykol, Tripropylenglykol, Polyalkylenglykol und/oder Polytetrahydrofuran bevorzugt mit einem zahlenmittleren Molekulargewicht von 120 bis 3000 g/mol, z.B. einem Polyethylenglykol mit einem zahlenmittleren Molekulargewicht von 200 g/mol oder ein Polyetrahydrofuran mit einem mittleren zahlenmittleren Molekulargewicht von 250 g/mol. Es können auch Gemische verschiedener Ankergruppen (A) Verwendung finden. Besonders bevorzugt sind solche Ether mit einem Ethylenoxidanteil im Polyetherol größer als 25 % besonders bevorzugt 25 % bis 100 %, bevorzugt 50 % bis 100% insbesondere 70 % bis 100 %.

Ein besonderer Vorteil in der Verwendung der erfindungsgemäßen Moleküle als Weichmacher besteht dann, wenn die Moleküle bei Raumtemperatur, d.h. bei 25°C und einem Druck von 1 bar flüssig sind. Dies kann dadurch erreicht werden, dass die Ankergruppe asymmetrisch ist, bzw. dass verschiedene symmetrische und/oder asymmetrische Ankergruppen miteinander vermischt werden.

Besonders bevorzugt sind solche Weichmacher, die ein Polyetherol als Ankergruppe haben, insbesondere solche, bei denen die zahlenmittlere Molmasse kleiner als die gewichtsmittlere Molmasse ist. Dadurch ist garantiert, dass eine Mischung von Ankergruppen vorliegt und das Produkt amorph ist.

Überraschenderweise ist die Löslichkeit solcher Weichmacher, die ein Polyetherol als Ankergruppe beinhalten, besonders hoch, wenn in der Ankergruppe ein hoher Anteil an Ethylenoxid, im Folgenden auch als EO bezeichnet, vorliegt. Bevorzugt sind Polyetheralkohole mit 2 bis 6, besonders bevorzugt 2 oder 3, insbesondere 2 Hydroxylgruppen. Besonders bevorzugt sind demnach solche Polyetherole als Ankergruppe, deren EO-Anteil im Polyetherol größer als 25 % ist, besonders bevorzugt 25 % bis 100 %, bevorzugt 50 % bis 100 % insbesondere 70 % bis 100 %. Dabei beziehen sich die Prozentangaben auf den Gewichtsanteil der Struktureinheit -[O-CH₂-CH₂]ₙ-O-, wobei n eine ganze Zahl aus dem Bereich von 1 bis 500 annimmt, bevorzugt 4 bis 250, insbesondere 8 bis 50, an dem Gesamtgewicht des Polyetherols vor der Umsetzung mit der phenolischen Gruppe zur Herstellung des Weichmachers.

Beispiele für besonders bevorzugte Polyetherole als Ankergruppen, sind das Pluriol® 200, Pluriol® 300, Pluriol® 400, Pluriol® 600,Pluriol® 800, Pluriol® 1000, Pluriol® 1500, alle erhältlich bei BASF Aktiengesellschaft, Ludwigshafen.

Die Herstellung der erfindungsgemäßen Weichmacher basiert auf der Umsetzung einer phenolischen Gruppe (F), bevorzugt einer phenolischen Carbonsäure und/oder einem phenolischen Carbonsäurederivat, mit einer Ankergruppe (A), d.h. einer Verbindung, die über mindestens eine Hydroxylgruppe und/oder mindestens eine Aminogruppe verfügt. Die Verbindung zwischen Wirkstoffgruppe (F) und Ankergruppe (A) erfolgt üblicherweise über eine Amid- und/oder eine Estergruppe. Zur Bildung dieser Esterund/oder Amidgruppe kann die entsprechende Säure direkt, aber auch geeignete Säurederivate wie z.B. Säurehalogenide, insbesondere Säurechlorige, Säureanhydride und andere Ester und/oder Amide der Säure, insbesondere solche mit einem flüchtigen Alkohol , z.B. Methanol eingesetzt werden. Die Säure oder Säurederivate werden in Gegenwart des Reduktionsmittels bei ansonsten üblichen Bedingungen, bevorzugt bei einem Druck zwischen 1000 mbar und 10 mbar, bei üblicherweise erhöhten Temperaturen, bevorzugt 70 °C bis 300°C, bevorzugt 110°C bis 200°C mit Alkoholen und/oder Aminen der Ankergruppe (A) zu den gewünschten Estern und/oder Amiden umgesetzt.

Beispielsweise kann der Methylester einer Wirkstoffgruppe (F), z.B. der Methylester der bevorzugten oder besonders bevorzugten phenolischen Carbonsäuren, insbesondere 3-(3,5-Ditert.Butyl-4-hydroxyphenyl)-propionsäuremethylester, mit einer Ankergruppe (A), z.B. einem Alkylalkohol mit einer OH-Gruppe und 7 bis 9 C-Atomen und/oder einem Polyethylengylkol mit einer zahlenmittleren Molmasse von 200 g/mol umgesetzt werden.

Dabei kann die Umsetzung gegebenenfalls in Gegenwart üblicher Katalysatoren durchgeführt werden. Zur Beschleunigung der Reaktion können allgemein bekannte Katalysatoren verwendet werden, z.B. Sulfonsäuren wie Toluolsulfonsäure oder basische Katalysatoren wie Lithiumhydroxid, Lithuimmethylat, Lithiumethylat, Kaliumhydroxid, Kaliummethylat, Kaliumethylat, Kalium-tert.-butylat, Natriumhydroxid, Natriummethylat, Natriumethylat oder/oder Natrium-tert butylat, bevorzugt aber Kaliummethylat und/oder Kalium tert.butylat. Bevorzugt sind basische Katalysatoren. Es hat sich gezeigt, dass es vorteilhaft ist, den Katalyator nicht auf einmal zur Reaktionsmischung zu geben, sondem nach und nach zuzudosieren, da so die Reaktionszeit verkürzt werden kann. Überraschenderweise hat sich gezeigt, dass bei Verwendung der oben genannten Katalysatoren im Vergleich mit üblichen metallischen Umesterungskatalysatoren wie z.B. Zinnverbindungen wie Dibutylzinndilaurat und/oder Dimethylzinndilaurat, Titanverbindungen wie Titantetrabutylat eine deutlich höhere Reduktion der Produktfarbe erreicht wird. Deshalb werden bevorzugt keine metallischen Katalysatoren eingesetzt. Wird ein basischer Katalysator zur Umesterung verwendet, so kann beispielsweise derart vorgegangen werden, dass man bevorzugt die Ankergruppe (IA), z.B. ein Polyetherol mit einer zahlenmittleren Molmasse von 200 g/mol typischerweise vorab in einen Reaktor gibt. Bevorzugt danach wird die Wirkstoffgruppe (F), z.B. 3-(3,5-Ditert.-Butyl-4-hydroxyphenyl)-propionsäuremethylester, in den Reaktor gegeben und die Mischung beispielsweise auf 100°C aufgeheizt. Nach der bevorzugten Inertisierung wird der basische Katalysator, z.B. Kaliummethylat, der in einer Konzentration von üblicherweise 500 bis 5000 ppm, besonders bevorzugt 1000 bis 2000 ppm bezogen auf die Gesamtmenge des Ansatzes eingesetzt wird, zudosiert. Danach wird die Reaktionstemperatur bevorzugt auf 120 bis 200°C, besonders bevorzugt 130 bis 170°C, insbesondere 140 bis 150°C angehoben und das entstehende Methanol abdestilliert. Gegebenenfalls kann zur Umsatzerhöhung während der Reaktion noch Kaliummethylat nachdosiert werden.

Nach Abschluss der Reaktion kann der Kaliumkatalysator dann nach allgemein bekannten Verfahren zur Abtrennung von Kaliumkatalysatoren aus Polyetherolen vom erfindungsgemäßen Stabilisator abgetrennt werden. Z.B. kann dies erfolgen durch Verwendung von Ionentauschern oder durch Verwendung von Phosphorsäure oder Salzsäure, bevorzugt aber Phosphorsäure. Hierzu können beispielsweise 85 % der stöchiometrischen Menge Phosphorsäure, stöchiometrisch bezieht sich hierbei auf die Menge des eingesetzten Kaliummethylats und kann daher variieren, zur Reaktionsmischung zudosiert und 30 min gerührt werden. Nach erfolgter Filtration des Phosphates kann der Stabilisator aufgrund seiner geringen Eigenfarbe ohne weitere aufwändige Reinigungsverfahren verwendet werden.

In einer bevorzugten Fahrweise kann zur Verbesserung der Farbe des Weichmachers ein Reduktionsmittel während der Synthese zudosiert werden, bevorzugt direkt vor der Zugabe des Katalysators. Als Reduktionsmittel können allgemein bekannte Reduktionsmittel eingesetzt werden, bevorzugt Phosphorverbindungen und/oder Natriumdithionit, besonders bevorzugt Organophosphorverbindungen des trivalenten Phosphors, insbesondere Phosphite und Phosphonite. Beispiele für geeignete Phosphorverbindungen sind z.B. Triphenyl phosphit, Diphenylalkylphosphit, Phenyldialkylphosphit, Tris-(nonylphenyl) phosphit, Trilaurylphosphit, Trioctadecylphosphit, Distearyl-pentaerythritol diphosphit, Tris-(2,4-di-tert-butylphenyl) phosphit, Di-isodecylpentaerythritol diphosphit, Di-(2,4-di-tert-butylphenyl)pentaerythritol diphosphit, Tristearyl-sorbitol triphosphit, Tetrakis-(2,4-di-tert-butylphenyl) 4,4'-diphenylenediphosphonit, 4,4'-Isopropylidenediphenol alkyl (C12-15) phosphit (CAS No: 96152-48-6), Poly (dipropylenglykol)-phenylphosphit, Tetraphenyl dipropylenglykol phosphit, Trisisodecylphosphit, Diisodecylphenylphosphit, Diphenylisodecylphosphit oder Gemische daraus.

Weitere Beispiele für Phosphorverbindungen sind zu finden in Plastics Additive Handbook, 5th edition, H. Zweifel, ed, Hanser Publishers, München, 2001 ([1]), S. 109-112. Bevorzugt eingesetzt wird Tris-(nonylphenyl)phosphit, 4,4'-Isopropylidenediphenol alkyl (C12-15) phosphit (CAS No: 96152-48-6), Poly (dipropylenglykol)-phenylphosphit, Tetraphenyl-dipropylenglykol phosphit. Besonders bevorzugt sind Poly(dipropylenglykol)-phenylphosphit, , 4,4'-Isopropylidenediphenol alkyl (C12-15) phosphit (Weston 439®) (CAS No: 96152-48-6), Tetraphenyl-dipropylenglykol phosphit. Triisooctylphosphit, Tris(-4-n-nonylphenyl)-phosphit, insbesondere Poly(dipropylenglykol)-phenylphosphit und , 4,4'-Isopropylidenediphenol alkyl (C12-15) phosphit (CAS No: 96152-48-6)
Es können auch Mischungen von Phosphiten eingesetzt werden.

Der Gehalt an Reduktionsmittel in der Reaktionsmischung zur Herstellung des phenolischen Weichmachers beträgt bevorzugt 0,01 bis 10 Gew.-% bezogen auf die Gesamtmasse der Mischung, besonders bevorzugt 0,1 bis 5 Gew.-%, insbesondere 0,1 bis 1 Gew.-%.

Die nach diesem bevorzugten Verfahren hergestellten phenolischen Ester und/oder Amide liegen im Verfahrensprodukt als Gemisch mit dem oder den Reduktionsmittel(n) vor. Dieses Gemisch weist insbesondere den Vorteil auf, dass seine Farbe besonders hell ist.

Bevorzugt weist der Weichmacher eine Viskosität gemessen nach ISO 3219 bei 60°C zwischen 1 mPa s und 100000 m Pa s, bevorzugt 10 mPa s und 10000 mPas, insbesondere 100 m Pas und 1000 mPas auf.

Bevorzugt sind solche phenolischen Weichmacher, bei denen die Molmasse zwischen 500 g/ mol und 10000 g/mol ist, besonders bevorzugt zwischen 700 g/mol und 5000 g/mol, insbesondere zwischen 700 g/mol und 3000 g/mol. Dies garantiert, dass der Weichmacher nicht aus dem Produkt verdampft aber die Viskosität des Weichmachers immer noch so niedrig ist, dass eine gute Dosierung möglich ist.

Der thermoplastische Kunststoff enthaltend die Verbindung (i) weist bevorzugt eine Shore-Härte zwischen 40 Shore A und 80 Shore A auf.

Die erfindungsgemäßen Weichmacher können auch in Kombination mit anderen Weichmachern eingesetzt werden, z.B. Benzoaten und Phthalaten.

Verfahren zur Herstellung von TPU sind allgemein bekannt. Beispielsweise können die thermoplastischen Polyurethane durch Umsetzung von (a) Isocyanaten mit (b) gegenüber Isocyanaten reaktiven Verbindungen mit einem Molekulargewicht von 500 bis 10000 und gegebenenfalls (c) Kettenverlängerungsmitteln mit einem Molekulargewicht von 50 bis 499 gegebenenfalls in Gegenwart von (d) Katalysatoren und/oder (e) üblichen Hilfs- und/oder Zusatzstoffen herstellt werden. Die erfindungsgemäßen Weichmacher (i) können sowohl den gegenüber Isocyanaten reaktiven Verbindungen (b) vor oder bei der Herstellung der TPU als auch dem fertigen TPU, beispielsweise dem geschmolzenen oder erweichtem TPU zugeführt werden. Das thermoplastische Polyurethan kann thermoplastisch verarbeitet werden, ohne dass die Wirkung der erfindungsgemäßen Weichmacher verloren geht. Im Folgenden sollen beispielhaft die Ausgangskomponenten und Verfahren zur Herstellung der bevorzugten TPU dargestellt werden. Die bei der Herstellung der TPU üblicherweise verwendeten Komponenten (a), (b), (c) sowie gegebenenfalls (d), (e) und/oder (f) sollen im Folgenden beispielhaft beschrieben werden:
a) Als organische Isocyanate (a) können allgemein bekannte aliphatische, cycloaliphatische, araliphatische und/oder aromatische Isocyanate eingesetzt werden, beispielsweise Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat und/oder 4,4'-, 2,4'- und 2,2'-Dicyclohexylmethan-diisocyanat, 2,2'-, 2,4'und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyl-diisocyanat, 1,2-Diphenylethandiisocyanat und/oder Phenylendiisocyanat.
b) Als gegenüber Isocyanaten reaktive Verbindungen (b) können die allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefasst werden, mit Molekulargewichten von 500 bis 8000, bevorzugt 600 bis 6000, insbesondere 800 bis 4000, und bevorzugt einer mittleren Funktionalität von 1,8 bis 2,3, bevorzugt 1,9 bis 2,2, insbesondere 2. Bevorzugt setzt man Polyetherpolyole ein, besonders bevorzugt solche Polyetherole auf Basis von Polyoxytetramethylenglykol. Die Polyetherole weisen den Vorteil auf, dass sie eine höhere Hydrolysestabilität als Polyesterole besitzen.
c) Als Kettenverlängerungsmittel (c) können allgemein bekannte aliphatische, araliphatische, aromatische und/oder cycloaliphatische Verbindungen mit einem Molekulargewicht von 50 bis 499, bevorzugt 2-funktionelle Verbindungen, eingesetzt werden, beispielsweise Diamine und/oder Alkandiole mit 2 bis 10 C-Atomen im Alkylenrest, insbesondere Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen, bevorzugt entsprechende Oligound/oder Polypropylenglykole, wobei auch Mischungen der Kettenverlängerer eingesetzt werden können.
d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)- acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile Polyhydroxylverbindung (b) eingesetzt.
e) Neben Katalysatoren (d) können den Aufbaukomponenten (a) bis (c) auch übliche Hilfsmittel (e) hinzugefügt werden. Genannt seien beispielsweise oberflächenaktive Substanzen, Füllstoffe, Flammschutzmittel, Keimbildungsmittel, Oxidationsstabilisatoren, Gleit- und Entformungshilfen, Farbstoffe und Pigmente, gegebenenfalls zusätzlich zu den erfindungsgemäßen Stabilisatoren weitere Stabilisatoren, z.B. gegen Hydrolyse, Licht, Hitze oder Verfärbung, anorganische und/oder organische Füllstoffe, Verstärkungsmittel und Weichmacher. Als Hydrolyseschutzmittel werden bevorzugt oligomere und/oder polymere aliphatische oder aromatische Carbodiimide verwendet.

Nähere Angaben über die oben genannten Hilfsmittel- und Zusatzstoffe sind der Fachliteratur zu entnehmen, z.B. aus Plastics Additive Handbook, 5^{th} edition, H. Zweifel, ed, Hanser Publishers, München, 2001. Alle in dieser Schrift genannten Molekulargewichte weisen die Einheit [g/mol] auf. Zur Einstellung von Härte der TPU können die Aufbaukomponenten (b) und (c) in relativ breiten molaren Verhältnissen variiert werden. Bewährt haben sich molare Verhältnisse von Komponente (b) zu insgesamt einzusetzenden Kettenverlängerungsmitteln (c) von 10 : 1 bis 1 : 10, insbesondere von 1 : 1 bis 1 : 4, wobei die Härte der TPU mit zunehmendem Gehalt an (c) ansteigt. Die Umsetzung kann bei üblichen Kennzahlen erfolgen, bevorzugt bei einer Kennzahl von 60 bis 120, besonders bevorzugt bei einer Kennzahl von 80 bis 110. Die Kennzahl ist definiert durch das Verhältnis der insgesamt bei der Umsetzung eingesetzten Isocyanatgruppen der Komponente (a) zu den gegenüber Isocyanaten reaktiven Gruppen, d.h. den aktiven Wasserstoffen, der Komponenten (b) und (c). Bei einer Kennzahl von 100 kommt auf eine Isocyanatgruppe der Komponente (a) ein aktives Wasserstoffatom, d.h. eine gegenüber Isocyanaten reaktive Funktion, der Komponenten (b) und (c). Bei Kennzahlen über 100 liegen mehr Isocyanatgruppen als OH-Gruppen vor. Die Herstellung der TPU kann nach den bekannten Verfahren kontinuierlich, beispielsweise mit Reaktionsextrudem oder dem Bandverfahren nach one-shot oder dem Prepolymerverfahren, oder diskontinuierlich nach dem bekannten Prepolymerprozess erfolgen. Bei diesen Verfahren können die zur Reaktion kommenden Komponenten (a), (b) und gegebenenfalls (c), (d) und/oder (e) nacheinander oder gleichzeitig miteinander vermischt werden, wobei die Reaktion unmittelbar einsetzt. Beim Extruderverfahren werden die Aufbaukomponenten (a), (b) sowie gegebenenfalls (c), (d) und/oder (e) einzeln oder als Gemisch in den Extruder eingeführt, z.B. bei Temperaturen von 100 bis 280°C, vorzugsweise 140 bis 250°C zur Reaktion gebracht, das erhaltene TPU wird extrudiert, abgekühlt und granuliert. Die Verarbeitung der erfindungsgemäßen TPU enthaltend die erfindungsgemäßen Weichmacher, die üblicherweise als Granulat oder in Pulverform vorliegen, zu den gewünschten Folien, Formteilen, Rollen, Fasern, Verkleidungen in Automobilen, Schläuchen, Kabelsteckern, Faltenbälgen, Schleppkabeln, Kabelummantelungen, Dichtungen, Riemen oder Dämpfungselementen erfolgt nach üblichen Verfahren, wie z.B. Spritzguss oder Extrusion. Die nach den erfindungsgemäßen Verfahren herstellbaren thermoplastischen Polyurethane, bevorzugt die Folien, Formteile, Schuhsohlen, Rollen, Fasern, Verkleidungen in Automobilen, Wischerblätter, Schläuche, Kabelstecker, Faltenbälge, Schleppkabel, Kabelummantelungen, Dichtungen, Riemen oder Dämpfungselemente weisen die eingangs dargestellten Vorteile auf.

### Beispiel 1

1.1 Synthese eines Weichmachers auf Basis Pluriol® 200
   25 g Pluriol® E 200 (OHZ: 557 mgKOH/g, 100 % EO) wurden mit 71,13 g 3-(3,5-Ditert.-Butyl.-4-hydroxyphenyl)-propionsäuremethylester und 0,88 g Trinonylphenylphosphit (Irgaphos® TNPP, CIBA Special Chemicals GmbH, Germany) in einen Vierhalskolben eingewogen und auf 145°C aufgeheizt. Während der Aufheizphase und der Umesterungsreaktion wurde kontinuierlich ein Stickstoffstrom durch die Lösung geleitet. Nach Erreichen der 145°C wurden 0,177 g = 2000 ppm Kaliummethylat zu der Lösung gegeben, um die eigentliche Umesterungsreaktion zu starten. Das entstandene Methanol wurde in einer nachgeschalteten Kühlfalle (flüssiger Stickstoff) ausgefroren. Nach sechs Stunden Reaktionszeit wurde das Produkt auf 80°C abgekühlt. Anschließend wurden 0,246 g 85%ige Phosphorsäure zur Neutralisation des Produktes in den Kolben gegeben. Das Produkt wurde noch eine halbe Stunde lang bei 80°C gerührt und anschließend über einen Druckfilter der Fa. Seitz-Schenk mit einem Filter Typ T750 (Rückhalterate 4 bis 10µm) filtriert.
1.2 Synthese eines Weichmachers auf Basis von PO/EO-Polyol
   Eingesetzt wurde ein PO/EO-Polyol mit einem EO-Anteil größer 70%. 500 g dieses Polyols mit einer Molmasse von 2145 g/mol wurden mit 135,57 g 3-(3,5-Ditert.-Butyl-4-hydroxypheny)-propionsäuremethylester in einen Vierhalskolben mit Destillationsbrücke und Temperaturüberwachung und Stickstoffspülung eingewogen und auf 145°C erhitzt. Bei Erreichen dieser Temperatur wurden 2000 ppm Kaliummethylat zudosiert, um die Umesterungsreaktion zu starten. Das entstehende Methanol wurde über die Destillationsbrücke aus dem Gleichgewicht entfernt. Nach 5 h Reaktionszeit wurde das Produkt auf 80°C abgekühlt. Anschließend wurden 1,73 g 85%iger Phosphorsäure zur Neutralisation des Katalysators zugegeben. Nach 30 min Rühren wurde das Produkt über einen Druckfilter (Fa. Seitz Schenk), filtriert.
1.3 Synthese eines Weichmachers auf Basis von PO/EO-Polyol
   Eingesetzt wurde ein PO/EO-Polyol mit einem EO-Anteil kleiner 30 %. 450 g dieses Polyols mit einer Molmasse von 1840 g/mol wurden mit 140,21 g 3-(3,5-Ditert.-Butyl-4-hydroxyphenyl)-propionsäuremethylester in einen Vierhalskolben mit Destillationsbrücke und Temperaturüberwachung und Stickstoffspülung eingewogen und auf 145°C erhitzt. Bei Erreichen dieser Temperatur wurden 2000 ppm Kaliummethylat zudosiert, um die Umesterungsreaktion zu starten.
   Das entstehende Methanol wurde über die Destillationsbrücke aus dem Gleichgewicht entfernt. Nach 5 h Reaktionszeit wurde das Produkt auf 80°C abgekühlt. Anschließend wurden 1,6 g 85%iger Phosphorsäure zur Neutralisation des Katalysators zugegeben. Nach 30 min Rühren wurde das Produkt über einen Druckfilter (Fa. Seitz Schenk), filtriert.
1.4 Synthese eines Weichmachers auf Basis von PTHF 1000
   PTHF 1000 ist ein Polytetrametylenglykolpolyol mit einem EO Anteil von 0 %. 380 g dieses Polyols mit einer Molmasse von 1000 g/mol wurden mit 221,08 g 3-(3,5-Ditert.-Butyl-4-hydroxyphenyl)-propionsäuremethylester in einen Vierhalskolben mit Destillationsbrücke und Temperaturüberwachung und Stickstoffspülung eingewogen und auf 145°C erhitzt. Bei Erreichen dieser Temperatur wurden 2000 ppm Kaliummethylat zudosiert, um die Umesterungsreaktion zu starten. Das entstehende Methanol wurde über die Destillationsbrücke aus dem Gleichgewicht entfernt. Nach 5 h Reaktionszeit wurde das Produkt auf 80°C abgekühlt. Anschließend wurden 1,6 g 85%iger Phosphorsäure zur Neutralisation des Katalysators zugegeben. Nach 30 min Rühren wurde das Produkt über einen Druckfilter (Fa. Seitz Schenk), filtriert.

### Beispiel 2

2.1 In einen 2-I-Weißblecheimer wurden 550 g eines Polyesterols (LP 1010, BASF Aktiengesellschaft) auf 80°C aufgeheizt. Anschließend wurde unter Rühren 219 g des erfindungsgemäßen Weichmachers 1.2 zugegeben. Danach wurden 47 g 1,4-Butandiol und 4,4 g Elastostab H 01 (Elastogran GmbH) zugegeben. Nach anschließender Erwärmung der Lösung auf 75°C wurden 275 g 4,4'-MDI (Methylendiphenyldiisocyanat) zugegeben und so lange gerührt, bis die Lösung homogen war. Anschließend wurde die Reaktionsmasse in eine flache Schale gegossen und bei 125°C auf einer Heizplatte 10 min getempert. Danach wurde die entstandene Schwarte in einem Heizschrank 24 h bei 100°C getempert. Nach dem Granulieren der Gießplatten wurden diese auf einer Spritzgussmaschine zu 2 mm Spritzplatten verarbeitet. Das Produkt hat eine Shorehärte von Shore 70 A.
2.2 In einen 2-I-Weißblecheimer wurden 1000 g eines Polyesterols ( LP 8110, BASF Aktiengesellschaft) auf 80°C aufgeheizt. Anschließend wurde unter Rühren 254 g des erfindungsgemäßen Weichmachers 1.1 zugegeben. Danach wurden 79 g 1,4-Butandiol und 8 g Elastostab H 01 (Elastogran GmbH) zugegeben. Nach anschließender Erwärmung der Lösung auf 75°C wurden 349 g 4,4'-MDI (Methylendiphenyldiisocyanat) zugegeben und so lange gerührt, bis die Lösung homogen war. Anschließend wurde die Reaktionsmasse in eine flache Schale gegossen und bei 125°C auf einer Heizplatte 10 min getempert. Danach wurde die entstandene Schwarte in einem Heizschrank 24 h bei 100°C getempert. Nach dem Granulieren der Gießplatten wurden diese auf einer Spritzgussmaschine zu 2 mm Spritzplatten verarbeitet. Das Produkt hat eine Shorehärte von Shore 60A.
2.3 In einen 2-1-Weißblecheimer wurden 600 g eines Polyetherols ( PTHF 1000, BASF Aktiengesellschaft) auf 80°C aufgeheizt. Anschließend wurde unter Rühren 344 g des erfindungsgemäßen Weichmachers 1.2 zugegeben. Danach wurden 72 g 1,4-Butandiol zugegeben. Nach anschließender Erwärmung der Lösung auf 75°C wurden 360 g 4,4'-MDI (Methylendiphenyldiisocyanat) zugegeben und so lange gerührt, bis die Lösung homogen war. Anschließend wurde die Reaktionsmasse in eine flache Schale gegossen und bei 125°C auf einer Heizplatte 10 min getempert. Danach wurde die entstandene Schwarte in einem Heizschrank 24 h bei 100°C getempert. Nach dem Granulieren der Gießplatten wurden diese auf einer Spritzgussmaschine zu 2 mm Spritzplatten verarbeitet. Das Produkt hat eine Shorehärte von Shore 70A.

### Beispiel 3

Zwei TPU der Elastogran GmbH, Lemförde Deutschland, Elastollan® 1185 A (Ether-TPU mit Shore-Härte 85 A), und Elastollan® 685 A (Ester-TPU mit Shore Härte 85 A) wurden zu 150 µm dicken Folien verarbeitet. Aus den Folien wurden runde, ca, 8 mm im Durchmesser große Stücke ausgeschnitten und bei Raumtemperatur in die vier Weichmacher aus Beispiel 1 gelegt. Nach 10 Wochen wurden die Folien entnommen, gereinigt und gewogen. Die Gewichtszunahme, dividiert durch das Startgewicht ergibt die Aufnahme an Weichmacher in %. Aus der Tabelle geht eindeutig hervor, dass die Löslichkeit der beiden Weichmacher, die mehr als 70 % EO im Polyetherol enthalten, deutlich höher sind als die Löslichkeiten der beiden anderen Weichmacher.

| Weichmacher | Konzentration in Elastollan® 1185 A | Konzentration in Elastollan® 685 A |
|---|---|---|
| 1.1 | 20,1 % | 14,5 % |
| 1.2 | 28,27 % | 30,48 % |
| 1.3 | 8,2 % | 2,7 % |
| 1.4 | 5,9 % | - |

### Beispiel 4

Der Weichmacher aus Beispiel 1.2 wurde im Vergleich zu den beiden kommerziellen Weichmachern Benzoflex® XP 4030, (Velsicol, USA) und Disflamoll® DPK (Bayer AG, Deutschland) in einer Thermogravimetrie erwärmt und die Gewichtsabnahme über die Zeit beobachtet. Dies ist ein Maß für die Flüchtigkeit des Weichmachers. Die Proben wurden dabei mit 10 K/min unter Stickstoff erhitzt. Die folgende Tabelle zeigt den onset der Verflüchtigung der Stabilisatoren. Der erfindungsgemäße Weichmacher hat eine wesentlich geringere Flüchtigkeit als die kommerziellen Produkte.

| Weichmacher | Onset der Verflüchtigung |
|---|---|
| Benzoflex® XP 4030 | 252°C |
| Disflamoll® DPK | 277°C |
| Weichmacher 1.2 | 384°C |

### Beispiel 5

Entsprechend ISO 3219 wurden die Viskositäten der Weichmacher aus Beispiel 1 in einem Rotationsviskosimeter mit Couette Geometrie bei 60°C bestimmt. Tabelle 3 gibt die Viskositäten wieder.

| Weichmacher | Viskosität in mPas |
|---|---|
| 1.1 | 542 mPas |
| 1.2 | 272 mPAs |
| 1.3 | 387 mPas |
| 1.4 | 199 mPas |

### Beispiel 6

Analog Beispiel 2.1 wurden Polyester TPU hergestellt, jedoch wurde die Menge der erfindungsgemäßen phenolischen Weichmacher variiert. Nach Herstellung der TPU wurde das Granulat zu Spritzplatten verarbeitet und die Shore-Härte gemessen. Tabelle 3 gibt die Ergebnisse wieder

**Tabelle 3**

| Versuch | Weichmacher | Menge (Gew.-%) | Shore-Härte |
|---|---|---|---|
| 6.1 | - | - | 85 a |
| 6:2 | 1.1 | 5 % | 82 A |
| 6:3 | 1.1 | 10% | 81 A |
| 6.4 | 1.1 | 15 % | 79 A |
| 6.5 | 1.1 | 20% | 75 A |
| 6.6 | Irganox®1135 | 5 % | 82 A |
| 6.6 | Irganox® 1135 | 10 % | 80 A |

## Patentansprüche

1. Thermoplastischer Kunststoff enthaltend Verbindung (i), die mindestens eine phenolische Gruppe aufweist, in einer Menge zwischen 5,5 Gew.-% und 50 Gew.-%, bezogen auf das Gesamtgewicht des thermoplastischen Kunststoffes.

2. Thermoplastischer Kunststoff gemäß Anspruch 1, **dadurch gekennzeichnet, dass** der thermoplastische Kunststoff thermoplastisches Polyurethan ist.

3. Thermoplastischer Kunststoff gemäß Anspruch 1, **dadurch gekennzeichnet, dass** die Verbindung (i) die folgende Struktur aufweist: (F-)ₙA mit den folgenden allgemeinen Bedeutungen:
F: die funktionelle Gruppe, die mindestens einen phenolischen Rest enthält,
A: eine Ankergruppe, an die der phenolische Rest geknüpft ist,
n: 1, 2, 3, 4, 5 oder 6.

4. Thermoplastischer Kunststoff gemäß Anspruch 3, **dadurch gekennzeichnet, dass** (F) die folgende Struktur aufweist:

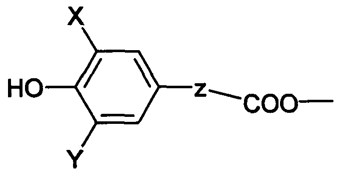

5. Thermoplastischer Kunststoff gemäß Anspruch 3, **dadurch gekennzeichnet, dass** (A) ein Polyetheralkohol ist.

6. Thermoplastischer Kunststoff gemäß Anspruch 3, **dadurch gekennzeichnet, dass** (A) ein Polyetheralkohol ist mit einem Ethylenoxid-Anteil größer als 25 %.

7. Thermoplastischer Kunststoff gemäß Anspruch 3, **dadurch gekennzeichnet, dass** in der Verbindung (i) zwei oder drei phenolische Gruppen vorliegen.

8. Thermoplastischer Kunststoff gemäß Anspruch 1, **dadurch gekennzeichnet, dass** der thermoplastische Kunststoff enthaltend die Verbindung (i) eine Shore-Härte zwischen 40 Shore A und 80 Shore A aufweist.

9. Thermoplastischer Kunststoff gemäß Anspruch 2, **dadurch gekennzeichnet, dass** die Verbindung (i) eine Viskosität bei 60°C gemessen nach ISO 3219 zwischen 1 mPas und 100000 mPas hat.
